# EUROPÄISCHE PATENTSCHRIFT

(11) **EP 2 848 362 B1**
(45) Veröffentlichungstag und Bekanntmachung des Hinweises auf die Patenterteilung: **17.05.2017**
(21) Anmeldenummer: 14173494.7
(22) Anmeldetag: 23.06.2014
(51) Int. Cl.: F16P 1/02

(54) **Schutzabdeckung**
Protective covering
Revêtement de protection

(30) Priorität: 16.09.2013 DE 202013104208 U
(43) Veröffentlichungstag der Anmeldung: 18.03.2015
(73) Patentinhaber: Arno Arnold GmbH, 63179 Obertshausen (DE)
(72) Erfinder: Gawlik, Josef, 63179 Obertshausen (DE)
(74) Vertreter: advotec.

(56) Entgegenhaltungen:
- DE-U1- 8 908 848
- DE-U1- 20 208 599
- DE-U1-202012 008 987
- JP-A- 2008 012 639

## Beschreibung

Die Erfindung betrifft eine Schutzabdeckung nach dem Oberbegriff des Anspruchs 1.

Schutzabdeckungen der genannten Art dienen insbesondere, jedoch keineswegs ausschließlich, zur Abdeckung von sich bewegenden Teilen an Werkzeugmaschinen, um einen unbeabsichtigten Eingriff eines Benutzers in den Gefährdungsbereich der Werkzeugmaschine zu verhindern. Gleichzeitig kann insbesondere bei spanenden Werkzeugmaschinen verhindert werden, dass Späne und Hilfsstoffe, wie Bohremulsion oder dergleichen, aus dem Arbeitsbereich der Werkzeugmaschine nach außen dringen.

Beim Verfahren der Schutzabdeckung während des Bearbeitungsvorgangs der Werkzeugmaschine werden die Stützrahmen der Abdeckung in der Regel gleitend auf einer Führungsanordnung verschoben. Durch Reibungseffekte zwischen Führungsanordnung und den Stützrahmen der Schutzabdeckung kann es dabei zu einem unerwünschten Verkippen einzelner Stützrahmen kommen, wodurch eine gleichförmige Bewegung der Schutzabdeckung insgesamt gestört werden kann.

Aus der JP 2008-12639 A ist eine Schutzabdeckung bekannt, bei der die einzelnen Segmente mehrteilig aufgebaut sind, wobei diese jeweils einen Stützrahmen aufweisen. An den Stützrahmen sind zur Oberseite weisend jeweils Teleskopbleche angebracht. Darunter befindet sich ein sich über alle Stützrahmen erstreckender oberer Faltenbalg. Jeweils zwischen zwei Stützbleche ist weiterhin jeweils ein mittiger Faltenbalg und darüber hinaus noch ein unterer Faltenbalg angeordnet. Hierbei ist der mittige Faltenbalg und der untere Faltenbalg an jeweils einer Längskante des Stützrahmen befestigt, wobei der mittige Faltenbalg und der untere Faltenbalg weiterhin in einem zwischen den Stützrahmen liegenden Faltengrund miteinander verbunden sind.

Wenngleich die vorherige Ausführung eine hohe Zuverlässigkeit verspricht und ein hohes Schutzniveau bietet, so gestaltet sich diese Ausführung jedoch als sehr komplex.

Ausgehend von diesem Stand der Technik ist es daher die Aufgabe der vorliegenden Erfindung, eine Schutzabdeckung zu schaffen, die in einer einfacheren Ausführung ein gleichförmigeres Verfahren ermöglicht.

Diese Aufgabe wird durch eine Schutzabdeckung nach der Lehre des Anspruchs 1 gelöst.

Vorteilhafte Ausgestaltungen der Erfindung sind Gegenstand der Unteransprüche.

Die Schutzabdeckung gemäß der vorliegenden Erfindung weist also in zunächst bekannter Weise eine Mehrzahl von zueinander beweglichen mindestens einen Schenkel aufweisenden Stützrahmen auf. Dabei kann die Schutzabdeckung als Dachbalg mit Stützrahmen mit nur einem Schenkel ausgeführt sein oder aber als abgewinkelter oder U-förmiger Balg mit Stützrahmen mit zwei oder mehr Schenkeln. Zwischen zwei Stützrahmen bzw. den entsprechenden Schenkeln jeweils zweier benachbarter Stützrahmen sind erste Balgabschnitte an diesen Stützrahmen angeordneten, wobei diese Balgabschnitte insgesamt einen Faltenbalg oder eine faltenbalgähnliche Abdeckung bilden. Die Balgabschnitte sind dabei mit ihren beiden Enden an den Stützrahmen bzw. am jeweiligen Schenkel der Stützrahmen so befestigt, dass zwischen den beiden jeweils benachbarten Stützrahmen in jedem Balgabschnitt ein Faltengrund gebildet wird.

Gemäß der vorliegenden Erfindung sind zwischen jeweils zwei benachbarten Stützrahmen mindestens zwei zweite Balgabschnitte angeordnet, die jeweils mit ihrem ersten Ende an einem der beiden benachbarten Stützrahmen und mit ihrem anderen Ende im Bereich des Faltengrundes am ersten Balgabschnitt befestigt sind. Dabei bilden diese zweiten Balgabschnitte zwischen dem Faltengrund der ersten Balgabschnitte und dem jeweils benachbarten Stützrahmen ebenfalls einen Faltengrund aus.

Dies bedeutet mit anderen Worten, dass die Stützrahmen durch diese zweiten Balgabschnitte, insbesondere durch deren Verbindung mit den ersten Balgabschnitten im Bereich deren Faltengrundes stabilisiert werden, wobei gleichzeitig aber weder das Auseinanderfahren noch das Zusammenfahren der Schutzabdeckung verhindert wird.

Erfindungsgemäß sind die ersten Balgabschnitte im Bereich einer Längskante eines Schenkels der Stützrahmen und die zweiten Balgabschnitte im Bereich der der ersten Längskante gegenüberliegenden zweiten Längskante der Stützrahmen an diesen befestigt. Dadurch wird insbesondere beim Auseinanderfahren der Schutzabdeckung durch die mittels der zweiten Balgabschnitte auf die zweite Längskante des Schenkels der Stützrahmen wirkende Zuglast ein Moment auf diese Schenkel induziert, das dem durch die ersten Balgabschnitte induzierten Moment entgegengerichtet ist. Dadurch erfolgt eine besonders gute Stabilisierung der Stützrahmen gegen ein unerwünschtes Verkippen. Durch die Wahl der Länge der zweiten Balgabschnitte kann zudem der Maximalauszug der Schutzabdeckung bestimmt werden.

Nach einem Ausführungsbeispiel der Erfindung können die ersten und/oder die zweiten Balgabschnitte jeweils einen einstückigen Faltenbalg bilden. Dies bedeutet mit anderen Worten, dass die ersten und/oder die zweiten Balgabschnitte insgesamt einen Faltenbalg bilden, der sämtliche Stützrahmen übergreifend an diesen befestigt. Alternativ zu dieser Ausgestaltung können nach einem weiteren Ausführungsbeispiel die ersten und/oder die zweiten Balgabschnitte auch als separate Elemente ausgebildet sein, die erst durch ihre Verbindung über die Stützrahmen einen Faltenbalg bilden. Es ist ebenfalls möglich, dass die zwischen zwei Stützrahmen angeordneten oder die beidseits eines Stützrahmens angeordneten zwei zweiten Balgabschnitte ein einstückiges Teil bilden.

Die Breite der ersten Balgabschnitte hängt primär von der gewünschten Abdeckung ab. Die zweiten Balgabschnitte können grundsätzlich die gleiche Breite aufweisen wie die ersten Balgabschnitte, wodurch im Ergebnis eine mehrlagige Schutzabdeckung gebildet wird, die eine erhöhte Sicherheit, beispielsweise eine erhöhte Durchschlagssicherheit, aufweist. Nach einem weiteren Ausführungsbeispiel der Erfindung jedoch weisen die die zweiten Balgschnitte eine Breite auf, die kleiner als die Breite der ersten Balgabschnitte ist. So können beispielsweise die zweiten Balgabschnitte durchaus eine Breite von lediglich wenigen Zentimetern und darunter aufweisen, so dass sich eine bandförmige Gestaltung der zweiten Balgabschnitte ergibt. Dadurch kann eine Minimierung des Materialeinsatzes für die zweiten Balgabschnitte bei gleichzeitig sichergestellter Stabilisierungswirkung für die Stützrahmen erreicht werden. Um dabei eine stabilisierende Wirkung über die gesamte Länge der Schenkel der Stützrahmen zu erzielen, sind vorzugsweise jeweils mindestens zwei zweite Balgabschnitte mit Abstand nebeneinander angeordnet. Vorzugsweise erfolgt die Anordnung symmetrisch zur Längsachse der Stützrahmen.

Das Material der Balgabschnitte ist grundsätzlich beliebig, solange zum Einen eine ausreichende Schutzwirkung erreichbar ist und zum Anderen eine Faltung beim Zusammenschieben der Schutzabdeckung ermöglicht wird. Nach einem Ausführungsbeispiel der Erfindung bestehen die ersten und/oder die zweiten Balgabschnitte aus einem textilen Material, das an Stützrahmen befestigt, insbesondere angenäht, wird. Im Bereich des Faltengrundes der ersten Balgabschnitte können dabei in einfacher Weise die ersten und zweiten Balgabschnitte miteinander ebenfalls vernäht werden.

Nach einem weiteren Ausführungsbeispiel bestehen die ersten und/oder die zweiten Balgabschnitte aus einem Kunststoffmaterial. Dabei kann dieses Kunststoffmaterial beispielsweise aus einer dünnen faltbaren Folie bestehen oder aber, falls das Kunststoffmaterial dicker ist und eine erhöhte Eigenstreifigkeit aufweist, der Faltengrund kann nach Art eines Folienscharniers ausgebildet sein.

Die Befestigung der ersten und/oder der zweiten Balgabschnitte an den Stützrahmen und im Bereich des Faltengrundes der ersten Balgabschnitte untereinander kann dabei auf grundsätzlich beliebige Weise erfolgen, beispielsweise ebenfalls durch Vernähen, Verkleben oder Verschweißen. Auch eine mechanische Verbindung beispielsweise durch Verschrauben, Vernieten oder Klemmen mittels eines Befestigungsclips oder einer Klemmschiene ist durchaus möglich.

Nachfolgend wird die Erfindung anhand lediglich ein Ausführungsbeispiel zeigender Zeichnungen näher erläutert.

Es zeigt:
- **Fig. 1**: im Längsschnitt einen Abschnitt einer Schutzabdeckung gemäß der Erfindung; und
- **Fig. 2**: das Ausführungsbeispiel nach Fig. 1 in perspektivischer Darstellung.

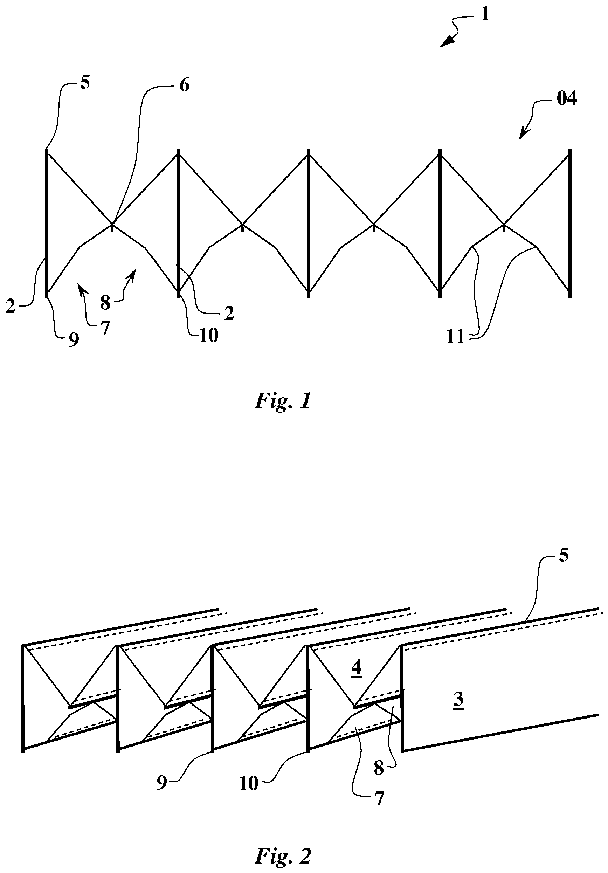

Der in der Fig. 1 dargestellte Abschnitt einer erfindungsgemäßen Schutzabdeckung 1 weist fünf Stützrahmen 2 auf. Diese Stützrahmen sind dabei jeweils mit einem Schenkel 3 versehen. Der Bereich der Stützrahmen, mit dem diese auf einer Führungseinrichtung, beispielsweise einer Führungsschiene einer Werkzeugmaschine, geführt werden, ist aus Gründen einer klareren Darstellung nicht gezeigt.

Zwischen jeweils zwei benachbarten Stützrahmen 2 sind erste Balgabschnitte 4 angeordnet, die beim hier dargestellten Ausführungsbeispiel aus einem textilen Material bestehen. Sämtliche Balgabschnitte 4 sind einstückig miteinander verbunden und bilden einen geschlossenen die Stützrahmen 2 übergreifenden Faltenbalg. Wie in Fig. 2 lediglich schematisch angedeutet ist, sind die Balgabschnitte 4 entlang einer ersten Längskante 5 der Schenkel 3 der Stützrahmen 2 mit diesen vernäht. Zwischen jeweils zwei benachbarten Stützrahmen 2 bilden die Balgabschnitte jeweils einen Faltengrund 6.

Weiter sind zwischen jeweils zwei Stützrahmen 2 zwei zweite Balgabschnitte 7 und 8 angeordnet, die ebenfalls aus textilem Material bestehen und insgesamt einstückig miteinander verbunden sind. Der Balgabschnitt 7 ist dabei mit seinem ersten Ende an der Längskante 9 des in der Zeichnung linken Stützrahmens befestigt, während der Balgabschnitt 8 mit seinem ersten Ende an der Längskante 10 des rechten Stützrahmens befestigt ist. Mit ihren jeweils zweiten Enden sind die Balgabschnitte 7 und 8 sowohl miteinander als auch im Bereich des Faltengrundes 6 des ersten Balgabschnittes 4 mit diesem verbunden, beim hier gezeigten Ausführungsbeispiel vernäht. Im Bereich zwischen dem jeweiligen Stützrahmen und dem Faltengrund 6 des ersten Balgabschnitts 6 weisen die Balgabschnitte 7 und 8 jeweils einen eigenen Faltengrund 11 auf.

Beim Auseinanderfahren der Schutzabdeckung vergrößert sich der Abstand zwischen zwei benachbarten Stützrahmen 2, wobei der Faltengrund 6 nach oben wandert und der Balgabschnitt 4 insgesamt gestreckt wird. Gleichzeitig erfolgt eine Streckung auch der Balgabschnitte 7 und 8. Beim Zusammenfahren verringert sich der Abstand der Stützrahmen 2, der Faltengrund 6 wandert nach unten und der Balgabschnitt 4 erfährt eine zunehmende Faltung. Gleichzeitig werden Balgabschnitte 7 und 8 gefaltet, wobei der Faltengrund 11 nach oben wandert.

Durch den gleichzeitigen Angriff der Balgabschnitte 2 an der oberen Längskante 5 der Stützrahmen 4 und der Balgabschnitte 7 und 8 an der unteren Längskante 10 der Stützrahmen, wobei die Balgabschnitte 4 sowie 7 und 8 miteinander verbunden sind, ergibt sich eine Stabilisierung der Stützrahmen gegen ein Verkippen um eine senkrecht zur Zeichenebene verlaufende Achse, wodurch eine wesentlich gleichförmigere Bewegung der Schutzabdeckung insgesamt erreicht werden kann.

Wie insbesondere aus Fig. 2 ersichtlich ist, sind die Balgabschnitte 7 und 8 gegenüber der Kante der Schutzabdeckung 1 zurückversetzt, so dass die Balgabschnitte 7 und 8 insgesamt eine geringere Breite aufweisen als die Balgabschnitte 4.

## Patentansprüche

1. Schutzabdeckung, insbesondere zur Abdeckung von sich bewegenden Teilen an Werkzeugmaschinen, mit einer Mehrzahl von zueinander beweglichen mindestens einen Schenkel (3) aufweisenden Stützrahmen (2) und mit jeweils zwischen zwei Stützrahmen (2) angeordneten und an diesen befestigten ersten Balgabschnitten (4), die insgesamt einen Faltenbalg oder eine faltenbalgähnliche Abdeckung bilden, wobei die Balgabschnitte (4) an ihren beiden Enden an den Stützrahmen (2) befestigt sind und zwischen den beiden jeweils benachbarten Stützrahmen (2) einen Faltengrund (6) bilden, wobei zwischen jeweils zwei benachbarten Stützrahmen (2) mindestens zwei zweite Balgabschnitte (7, 8) angeordnet sind, die jeweils mit ihrem ersten Ende an einem der beiden benachbarten Stützrahmen (2) und mit ihrem anderen Ende im Bereich des Faltengrundes (6) am ersten Balgabschnitt (4) befestigt sind, wobei die zweiten Balgabschnitte (7, 8) zwischen dem Faltengrund (6) der ersten Balgabschnitte (2) und dem jeweils benachbarten Stützrahmen (2) ebenfalls einen Faltengrund (11) bilden,
**dadurch gekennzeichnet,**
**dass** die ersten Balgabschnitte (4) im Bereich einer Längskante (5) eines Schenkels (3) der Stützrahmen (2) und die zweiten Balgabschnitte (7, 8) im Bereich der der ersten Längskante (5) gegenüberliegenden zweiten Längskante (9) der Stützrahmen (2) an diesen befestigt sind.

2. Schutzabdeckung nach Anspruch 1,
**dadurch gekennzeichnet,**
**dass** die ersten (4) und/oder die zweiten (7, 8) Balgabschnitte jeweils einen einstückigen Faltenbalg bilden.

3. Schutzabdeckung nach Anspruch 1,
**dadurch gekennzeichnet,**
**dass** die ersten (4) und/oder die zweiten (7, 8) Balgabschnitte als separate Elemente ausgebildet sind.

4. Schutzabdeckung nach einem der Ansprüche 1 bis 3,
**dadurch gekennzeichnet,**
**dass** die zweiten Balgschnitte (7, 8) eine Breite aufweisen, die kleiner als die Breite der ersten Balgabschnitte (4) ist.

5. Schutzabdeckung nach Anspruch 4,
**dadurch gekennzeichnet,**
**dass** jeweils mindestens zwei zweite Balgabschnitte (7, 8) mit Abstand nebeneinander angeordnet sind.

6. Schutzabdeckung nach einem der Ansprüche 1 bis 5,
**dadurch gekennzeichnet,**
**dass** die ersten (4) und/oder die zweiten (7, 8) Balgabschnitte aus einem textilen Material bestehen und an den Stützrahmen (2) angenäht und im Bereich des Faltengrundes (6) der ersten Balgabschnitte (4) miteinander vernäht sind.

7. Schutzabdeckung nach einem der Ansprüche 1 bis 5,
**dadurch gekennzeichnet,**
**dass** die ersten und/oder die zweiten Balgabschnitte aus einem Kunststoffmaterial bestehen und der Faltengrund nach Art eines Folienscharniers ausgebildet ist.

8. Schutzabdeckung nach Anspruch 7,
**dadurch gekennzeichnet,**
**dass** die ersten und/oder die zweiten Balgabschnitte und an den Stützrahmen und im Bereich des Faltengrundes der ersten Balgabschnitte miteinander verklebt, verschweißt oder durch eine mechanische Verbindung miteinander verbunden sind.

## Claims

1. A protective covering, in particular for covering moving parts on machine tools, having a plurality of supporting frames (2) being movable relative to each other and comprising at least one leg (3), and having first bellows sections (4), each being arranged between two supporting frames (2) and being secured thereto, said first bellows sections (4) as a whole forming a bellows or a bellows-like covering, said bellows sections (4) being secured to the supporting frames (2) at both their ends and forming a fold base (6) between two respectively adjacent supporting frames (2), at least two second bellows sections (7, 8) being arranged between two respectively adjacent supporting frames (2), said second bellows sections (7, 8) each being secured to one of the two adjacent supporting frames (2) by their first end and to the first bellows section (4) in the area of the fold base (6) by their other end, the second bellows sections (7, 8) also forming a fold base (11) between the fold base (6) of the first bellows sections (4) and the respectively adjacent supporting frame (2),
**characterized in that**
the first bellows sections (4) are secured to the supporting frames (2) in the area of a longitudinal edge (5) of a leg (3) of the supporting frames (2) and the second bellows sections (7, 8) are secured to the supporting frames (2) in the area of the second longitudinal edge (9) of the supporting frames (2) opposite to the first longitudinal edge (5).

2. The protective covering according to claim 1,
**characterized in that**
the first (4) and/or the second (7, 8) bellows sections each form one-piece bellows.

3. The protective covering according to claim 1,
**characterized in that**
the first (4) and/or the second (7, 8) bellows sections are formed as separate elements.

4. The protective covering according to any one of the claims 1 to 3,
**characterized in that**
the second bellows sections (7, 8) have a width which is smaller than the width of the first bellows sections (4).

5. The protective covering according to claim 4,
**characterized in that**
at least two second bellows sections (7, 8) are respectively arranged adjacent to each other with a spacing.

6. The protective covering according to any one of the claims 1 to 5,
**characterized in that**
the first (4) and/or the second (7, 8) bellows sections consist of a textile material and are sewed to the supporting frames (2) and sewed to each other in the area of the fold base (6) of the first bellows sections (4).

7. The protective covering according to any one of the claims 1 to 5,
**characterized in that**
the first and/or the second bellows sections are composed of a plastic material and the fold base is formed like a film hinge.

8. The protective covering according to claim 7,
**characterized in that**
the first and/or the second bellows sections are connected to the supporting frames and in the area of the fold base of the first bellows sections by being glued, welded or mechanically linked.

## Revendications

1. Couverture de protection, en particulier pour recouvrir des parts mobiles à des machines-outils, ayant une pluralité de cadres de support (2), étant mobiles les uns par rapport aux autres et comprenant au moins une jambe (3), et ayant des premières sections de soufflet (4) dont chacune est disposée entre deux cadres de support (2) et est attachée à ceux-ci, lesdites premières sections de soufflet (4) dans leur ensemble formant un soufflet ou une couverture ressemblant à un soufflet, lesdites sections de soufflet (4) étant attachées aux cadres de support (2) par leurs extrémités et formant une base de pli (6) entre deux cadres de support (2) adjacents à chaque fois, au moins deux deuxièmes sections de soufflet (7, 8) étant disposées entre deux cadres de support (2) adjacents à chaque fois, lesdites deuxièmes sections de soufflet (7, 8) chacune étant attachées à un de deux cadres de support (2) adjacents par leur première extrémité et à la première section de soufflet (4) dans la zone de la base de pli (6) par leur autre extrémité, lesdites deuxièmes sections de soufflet (7, 8) formant également une base de pli (11) entre la base de pli (6) des premières sections de soufflet (4) et le cadre de support (2) adjacent à chaque fois,
**caractérisée en ce que**
. les premières sections de soufflet (4) sont attachées aux cadres de support (2) dans la zone d'un bord longitudinal (5) d'une jambe (3) des cadres de support (2) et les deuxièmes sections de soufflet (7, 8) sont attachées aux cadres de support (2) dans la zone du deuxième bord longitudinal (9) des cadres de support (2) opposé au premier bord longitudinal (5).

2. Couverture de protection selon la revendication 1,
**caractérisée en ce que**
les premières (4) et/ou les deuxièmes (7, 8) sections de soufflet chacune forment un soufflet en une seule pièce.

3. Couverture de protection selon la revendication 1,
**caractérisée en ce que**
les premières (4) et/ou les deuxièmes (7, 8) sections de soufflet sont formées en tant qu'éléments séparés.

4. Couverture de protection selon l'une quelconque des revendications 1 à 3,
**caractérisée en ce que**
les deuxièmes sections de soufflet (7, 8) ont une largeur qui est plus petite que la largeur des premières sections de soufflet (4).

5. Couverture de protection selon la revendication 4,
**caractérisée en ce qu'**
au moins deux deuxièmes sections de soufflet (7, 8) sont chacune disposées à distance les unes à côté des autres.

6. Couverture de protection selon l'une quelconque des revendications 1 à 5,
**caractérisée en ce que**
les premières (4) et/ou les deuxièmes (7, 8) sections de soufflet se composent d'un matériau textile et sont cousues aux cadres de support (2) et sont cousues les unes aux autres dans la zone de la base de pli (6) des premières sections de soufflet (4).

7. Couverture de protection selon l'une quelconque des revendications 1 à 5,
**caractérisée en ce que**
les premières et/ou les deuxièmes sections de soufflet se composent d'un matériau plastique et la base de pli est formée à la manière d'une charnière film.

8. Couverture de protection selon la revendication 7,
**caractérisé en ce que**
les premières et/ou les deuxièmes sections de soufflet sont reliées les unes aux autres aux cadres de support et dans la zone de la base de pli des premières sections de soufflet en étant collées, soudées ou reliées de manière mécanique.
